Europäisches Patentamt

European Patent Office

Office européen des brevets

(11) Veröffentlichungsnummer: **0 296 145**
**A2**

## (12) EUROPÄISCHE PATENTANMELDUNG

(21) Anmeldenummer: 88890121.2

(22) Anmeldetag: 17.05.88

(51) Int. Cl.⁴: **B 01 D 11/02**

(30) Priorität: 20.05.87 AT 1280/87

(43) Veröffentlichungstag der Anmeldung:
21.12.88 Patentblatt 88/51

(84) Benannte Vertragsstaaten:
BE CH DE FR GB IT LI NL SE

(71) Anmelder: **SCHOELLER-BLECKMANN GES. M.B.H.**
**Hauptstrasse 2**
**A-2630 Ternitz (AT)**

(72) Erfinder: **Peters, Henning, Dr.-Ing.**
**Lichtenwörtergasse 6 B**
**A-2630 Ternitz (AT)**

(54) Verfahren und Anordnung zur Beschickung eines Druckraumes.

(57) Die Erfindung betrifft ein Verfahren und eine Anordnung zum Behandeln von fließfähigem, insbesondere rieselfähigem Gut in einem Druckraum, z.B. Extraktor, wobei das Gut in einen Eintragsraum mit im Vergleich zum Druckraum niedrigerem Druck, vorzugsweise Atmosphärendruck, eingebracht und nach Vornahme einer Druckanpassung des im Eintragsraum bestehenden Druckes an den Druck des Behandlungsfluids im Druckraum aus dem Eintragsraum in den Druckraum übergeführt wird, aus dem das behandelte Gut in einen Austragsraum ausgetragen wird. Erfindungsgemäß ist vorgesehen, daß zum Erreichen eines Druckausgleiches zwischen dem Eintragsraum und dem Druckraum der Eintragsraum mit dem Druckraum leitungsmäßig verbunden und Fluid aus dem Druckraum in den Eintragsraum übergeleitet wird. Ferner ist vorgesehen, daß im Eintragsraum (1) ein Verdränger bzw. Kolben (10) angeordnet ist, mit dem das Volumen des Eintragsraumes (1) insbesondere vor und nach der Beschickungsphase des Druckraumes (2) veränderbar ist.

EP 0 296 145 A2

Bundesdruckerei Berlin

Beschreibung

## Verfahren und Anordnung zur Beschickung eines Druckraumes

Die Erfindung betrifft ein Verfahren zum Behandeln von fließfähigem, insbesondere rieselfähigem, Gut in einem Druckraum, z.B. Extraktor, wobei das Gut in einen Eintragsraum mit im Vergleich zum Druckraum niedrigerem Druck, vorzugsweise Atmosphärendruck, eingebracht und nach Vornahme einer Druckanpassung des im Eintragsraum bestehenden Druckes an den Druck des Behandlungsfluids im Druckraum aus dem Eintragsraum in den Druckraum übergeführt wird, aus dem das behandelte Gut in einen Austragsraum ausgetragen wird.

Ferner betrifft die Erfindung eine Anordnung zum Behandeln von fließfähigem, insbesondere rieselfähigem, Gut in einem Druckraum, z.B. Extraktor, der über Gutleitungen mit einem vorgeordneten Eintragsraum und einem nachgeordneten Austragsraum verbunden ist, wobei dem Eintragsraum Beschickungseinrichtungen für das zu behandelnde Gut und dem Druckraum Zufuhreinrichtungen für ein Behandlungsfluid zugeordnet sind.

Bekannte Verfahren bzw. Anordnungen dieser Art weisen den Nachteil auf, daß beim Beschicken, d.h. Einbringen und Austragen des Gutes in bzw. aus dem Druckraum das Gut Temperatur- und Druckschwankungen unterworfen ist und Schwankungen in der Zusammensetzung des Fluides auftreten, mit welchem das Gut in Berührung gebracht wird, welche dem Gut nicht zuträglich sind. Ferner soll das Gut ohne schädigendes Zusammenpressen in den Druckraum ein-und aus diesem ausgetragen werden. Ferner soll der Energiebedarf verringert und möglichst wenig Fluid verbraucht werden. Erfindungsgemäß werden diese Ziele bei einem Verfahren der eingangs genannten Art dadurch erreicht, daß zum Erreichen eines Druckausgleiches zwischen dem Eintragsraum und dem Druckraum der Eintragsraum mit dem Druckraum leitungsmäßig verbunden und Fluid aus dem Druckraum in den Eintragsraum übergeleitet wird. Auf Grund dieser Vorgangsweise entfällt eine mit einem Temperaturanstieg verbundene Komprimierung des Fluides im Eintragsraum und der Druckaufbau erfolgt mit bereits im Verfahren befindlichem Fluid. Durch den Druckausgleich wird eine Verwirbelung des Gutes vermieden, die insbesondere dann auftritt, wenn die Gutüberleitung durch eine Gutleitung mit großen Querschnitt bewerkstelligt wird. Das Einleiten des Druckfluides aus dem Druckraum in den Eintragsraum kann langsam und somit ohne sonderliche Temperaturänderungen und Störungen des Gutes erfolgen. Besondere Regeleinrichtungen zur genauen Druckeinstellung im Eintragsraum sind nicht erforderlich.

Bevorzugt ist es, wenn vor dem Druckausgleich das Volumen des Eintragsraumes bis auf den vom zu behandelnden Gut eingenommenen Raum, gegebenenfalls unter Vornahme eines Zusammenpressens des Gutes, verringert wird, wobei im Eintragsraum befindliches Fluid, insbesondere Behandlungsfluid, aus diesem verdrängt wird. Durch diese vor dem Druckausgleich vorgenommene Verringerung des Volumens des Eintragsraumes wird der Raum, in dem der Druck erhöht wird, gering gehalten und nur eine geringere Menge von Behandlungsfluid aus dem Druckraum in den Eintragsraum überströmen. Um zwischen dem Gut befindliches Fluid aus dem Gut und dem Eintragsraum zu entfernen, kann ein vorsichtiges Zusammenpressen des Gutes vorgenommen werden, bevor der Druckausgleich hergestellt wird, ohne dabei jedoch das Gut zu beeinflussen. Das anfallende Fluid kann zur Wiederverwendung gespeichert werden oder kann als Behandlungsfluid eingesetzt werden.

Zweckmäßig ist es, wenn nach dem Überleiten des zu behandelnden Gutes vom Eintragsraum in den Druckraum und Trennung der Verbindung zwischen Eintragsraum und Druckraum das im verringerten Volumen befindliche Fluid entspannt, insbesondere auf das gesamte Volumen des Eintragsraumes und vorzugsweise auf Atmosphärendruck entspannt wird. Durch eine derartige Entspannung des Fluides im Eintragsraum kann ohne Aufwand eine sofortige neuerliche Beschickung des Eintragsraumes mit Gut erfolgen und eine quasi kontinuierliche Beschickung des Druckraumes erreicht werden; auch werden Einsparungen an Fluid erreicht.

Vorteilhafterweise kann vorgesehen sein, daß vor dem Druckausgleich der Druck im Eintragsraum durch Fluideinspeisung insbesondere von Behandlungsfluid aus einer Druckfluidquelle erhöht wird. Durch diese Maßnahme kann vor dem Druckausgleich eine anfängliche Druckerhöhung im Eintragsraum erfolgen. Insbesondere wird eine derartige Druckerhöhung dann erfolgen, wenn bereits durch Verringerung des Volumens des Eintragsraumes das in ihm bzw. zwischen dem Gut befindliche, gegebenenfalls unerwünschte Bestandteile enthaltende Fluid verdrängt wurde und das Druckfluid dem Behandlungsfluid zugesetzt werden soll. In diesem Fall kann die Einspeisung von Druckfluid aus dem Druckraum in den Eintragsraum geregelt bzw. minimiert werden.

In ähnlicher Weise werden erfindungsgemäß die beim Austragen von behandeltem Gut aus dem Druckraum auftretenden Probleme gelöst. Erfindungsgemäß ist dazu vorgesehen, daß zum Erreichen eines Druckausgleiches zwischen dem Druckraum und dem Austragsraum der Austragsraum mit dem Druckraum leitungsmäßig verbunden wird und Fluid aus dem Druckraum in den Austragsraum übergeleitet wird. Insbesondere wird dadurch erreicht, daß besondere Vorkehrungen zur Druckerhöhung im Austragsraum nicht notwendig werden.

Bevorzugt ist es hiebei, wenn vor Herstellung einer leitungsmäßigen Verbindung zwischen dem Druckraum und dem Austragsraum das Volumen des Austragsraumes auf ein Restvolumen, insbesondere nahe dem Wert Null, reduziert wird und eine Vergrößerung des Volumens des Austragsraumes vorzugsweise nur auf einen Teil des Volumens des Austragsraumes konform mit dem Überströmen von Behandlungsfluid in den Austragsraum vorgenommen wird. Auf diese Weise erreicht man, daß ein Druckabfall im Behandlungsfluid weitgehend vermieden wird und ein Abkühlung des Behandlungsfluides und des behandelten Gutes unterbleibt. Das Restvolumen des Austragsraumes wird in dem Ausmaß vergrößert, in dem Druckfluid aus dem Druckraum in den Austragsraum überströmt; der Druckabfall wird dabei immer unter einem vorgegebenen Wert gehalten, um nachteilige Folgen für das Gut zu vermeiden.

Das Eintragen des Gutes in den Druckraum erfolgt bei stationärem Druck, d.h. nach einem Druckausgleich; hingegen ist es möglich, daß nach und/oder während dem Druckausgleich zwischen dem Druckraum und dem Austragsraum behandeltes Gut aus dem Druckraum in den Austragsraum übergeführt wird. Dies wird dadurch möglich, da der Druckaus gleich zwischen dem Druckraum und dem Austragsraum keine sonderlichen Druckschwankungen und Abkühlerscheinungen bewirkt, da das Volumen des Austragsraumes gesteuert vergrößert wird und keine plötzliche Expansion des Behandlungsfluides erfolgt. Es müssen somit nicht unbedingt stationäre Verhältnisse abgewartet werden.

Zweckmäßig ist es, wenn nach dem Überführen des behandelten Gutes in den Austragsraum durch Volumenverkleinerung des Austragsraumes, gegebenenfalls unter Vornahme eines gleichzeitigen Pressens des Gutes, eine Rückführung von Behandlungsfluid in den Druckraum erfolgt. Mit dieser Maßnahme kann im Austragsraum bzw. zwischen dem Gut vorhandenes Behandlungsfluid in den Druckraum oder in einen Auffangbehälter gedrückt werden und eine Einsparung an Behandlungsfluid erfolgen.

Das Austragen wird einfach, wenn nach dem Überleiten des behandelten Gutes in den Austragsraum und Unterbrechung der Verbindung zwischen dem Druckraum und dem Austragsraum ein Druckabbau im Austragsraum, insbesondere auf Atmosphärendruck, durch Vergrößerung seines Volumens erfolgt und das behandelte Gut entnommen wird.

Um beim Überleiten des Gutes im Druckraum Druckschankungen völlig zu vermeiden, kann vorgesehen sein, daß das Einspeisen des zu behandelnden Gutes in den Druckraum gleichzeitg mit dem Austragen des behandelten Gutes aus dem Druckraum erfolgt. Zweckmäßig ist es, wenn das Überleiten des Gutes vom Eintragsraum in den Druckraum bzw. vom Druckraum in den Austragsraum durch Schwerkraftförderung erfolgt.

Das erfindungsgemäße Verfahren ist besonders vorteilhaft anzuwenden, wenn als zu behandelndes Gut ein extrahierbares Gut, z.B. Tee, Kaffee od. dgl., eingesetzt wird und das Gut im Druckraum mit überkritischem $CO_2$-$H_2O$-Dampf als Behandlungsfluid bei einer Temperatur von 40 bis 150°C und Drücken von 100 bis 400 bar, vorzugsweise 200 bis 300 bar, in Kontakt gebracht wird.

Eine Anordnung der eingangs genannten Art ist erfindungsgemäß dadurch gekennzeichnet, daß im Eintragsraum ein Verdränger bzw. Kolben angeordnet ist, mit dem das Volumen des Eintragsraumes insbesondere vor und nach der Beschickungsphase des Druckraumes veränderbar ist. Mit Hilfe dieses Kolbens ist es möglich, das Volumen des Eintragsraumes an die Erfordernisse im Zuge des Eintragens des Gutes in den Druckraum anzupassen. So wird z.B. das Volumen des Eintragsraumes durch Verschieben des Kolbens nach dem Einbringen des zu behandelnden Gutes derart verringert, daß oberhalb des eingebrachten Gutes kein Raum mehr für Behandlungsfluid vorhanden ist; durch leichtes Zusammendrücken des zu behandelnden Gutes kann ferner zwischen dem Gut vorhandenes Behandlungsfluid verdrängt werden; im Zuge des Druckausgleiches zwischen dem Druckraum und dem Eintragsraum muß somit nur eine geringe Menge von Behandlungsfluid in den Eintragsraum eingeströmt werden. Eine Weiterbewegung des Kolbens im Sinne einer Verringerung des Volumens des Eintragsraumes kann das zu behandelnde Gut, ohne Druck aufwenden zu müssen, in den Druckraum überführen. Nach Trennung der Verbindung Druckraum - Eintragsraum wird durch Verstellung des Kolbens im Sinne einer insbesondere maximalen Vergrößerung des Volumens des Eintragsraumes das Fluid im Eintragsraum weitgehendst entspannt, insbesondere auf Atmosphärendruck entspannt, so daß eine neue Beladung des Eintragsraumes ohne aufwendigen Druckausgleich und bei geringem Verlust an Fluid vor sich gehen kann.

Üblicherweise ist zur Überführung des Gutes aus dem Eintragsraum in den Druckraum eine Gutleitung mit ziemlich großem Querschnitt vorgesehen. Wenn über diese Leitung ein Druckausgleich zwischen Druckraum und Eintragsraum vorgenommen wird, erfolgt ein plötzliches Überströmen einer großen Menge an Druckfluid, da eine Feinregulierung von Leitungen mit großem Querschnitt relativ schwierig ist. Aus diesem Grund ist vorgesehen, daß zusätzlich zur absperrbaren Gutleitung zwischen dem Eintragsraum und dem Druckraum eine mit einem insbesondere feinregulierbaren Ventil absperrbare Druckausgleichleitung vorgesehen ist.

Erfindungsgemäß ist bei einer erfindungsgemäßen Anordnung ferner vorgesehen, daß im Austragsraum ein weiterer Verdränger bzw. Kolben angeordnet ist, mit dem das Volumen des Austragsraumes insbesondere vor und nach der Austragsphase aus dem Druckraum veränderbar ist. Mit dem Kolben im Austragsraum kann zu Beginn des Druckausgleiches zwischen dem Druckraum und dem Austragsraum das Volumen des Austragsraumes auf ein kleines Restvolumen eingestellt werden, das langsam vergrößert wird, so daß nur ein langsames Überströmen des Druckfluides in den Austragsraum erfolgt. Beim Absenken des Kolbens erfolgt somit eine Druckerhöhung im Austragsraum, ohne daß dabei eine wesentliche Abkühlung des Druckfluids bzw. eine Beeinflussung des behandelten Gutes erfolgt. Gleichzeitig kann mit dem Kolben nach dem Überführen des Gutes in den Austragsraum durch Verkleinerung des Volumens des Austragsraumes eine gewisse Menge Druckfluid bei gleich bleibendem Druck in den Druckraum oder in einen Speicher rückgeführt werden. Wenn daraufhin der Druckraum vom Austragsraum wieder getrennt wird, kann durch Vergrößerung des Volumens des Austragsraumes eine Enspannung des Volumens erfolgen und wenn diese Entspannung bis auf Atmosphärendruck erfolgt, kann eine unbehinderte Entnahme des behandelten Gutes aus dem Austragsraum erfolgen.

Da auch beim Austragen des Gutes Gutleitungen mit großem Querschnitt verwendet werden, ist es zweckmäßig, wenn zusätzlich zur absperrbaren Gutleitung zwischen dem Druckraum und dem Austragsraum eine mit einem weiteren, insbesondere feinregulierbaren Ventil absperrbare weitere Druckausgleichleitung vorgesehen ist. Damit werden Probleme bei einer Fluidüberleitung durch die Gutleitung vom Druckraum in den Austragsraum vermieden. Zweckmäßigerweise ist dabei vorgesehen, daß der Querschnitt der Gutleitungen größer, insbesondere beträchtlich größer ist als der Querschnitt der Druckausgleichleitungen.

Erfindungsgemäß kann ferner vorgesehen sein, daß der Verdränger bzw. Kolben und der weitere Verdränger bzw. Kolben zur Durchführung synchroner Kolbenbewegungen während der Beschickungs- und Austragsphase gegebenenfalls mittels einer hydraulischen Antriebseinrichtung gekoppelt sind. Damit ergeben sich Energieeinsparungen, weil der Druck im Druckraum konstant gehalten wird, da das aus dem Eintragsraum verdrängte Fluidvolumen und das vom Austragsraum aufgenommene Fluidvolumen gleich eingeregelt werden können.

Vorteilhaft ist es ferner, wenn zur Steuerung der Verdränger bzw. Kolben und der Ventile in den Druckaus gleichleitungen eine Steuereinrichtung für entsprechende Kolbenantriebe und Ventilantriebe vorgesehen ist. Mit einer derartigen Steuereinrichtung können die zuvor beschriebenen Verstellbewegungen der Kolben sowie der Ventile in den Druckausgleichleitungen und Gutleitungen sowie die der Beschickungsventile, Behandlungsfluidventile sowie alle weiteren während des Beschickungs- und Austrags- und Behandlungsvorganges zu betätigenden Einrichtungen gesteuert werden.

Das erfindungsgemäße Verfahren und die erfindungsgemäßen Vorrichtungen können für beliebige Behandlungen von Gut eingesetzt werden. Insbesondere werden Anordnungen und Verfahren der erfindungsgemäßen Art zur Extraktion von extrahierbaren Stoffen aus Gütern, z.B. Tee, Kaffee, Blütenblättern und anderen Schüttgütern, eingesetzt, aus denen Aromastoffe bzw. ätherische Öle extrahiert werden sollen. Als Extraktionsmittel wird vorzugsweise überkritisches $CO_2$ mit einem Anteil an Wasserdampf eingesetzt.

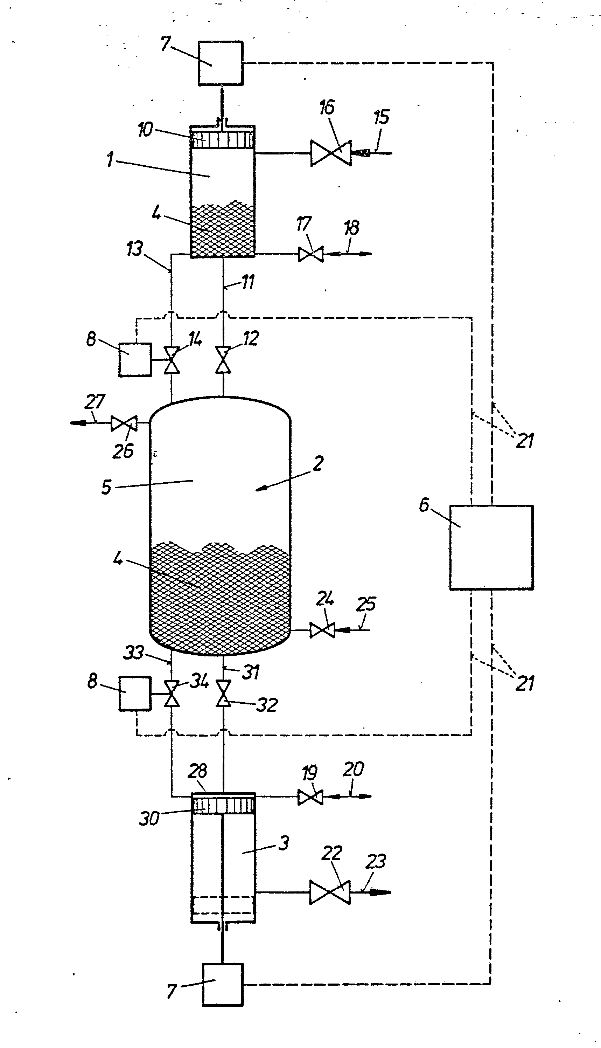

Im folgenden wird die Erfindung anhand der Zeichnung näher erläutert, in der ein Schema eines Ausführungsbeispieles der erfindungsgemäßen Anordnung im vorliegenden Fall einer Extraktionsanlage dargestellt ist.

Gemäß der Figur ist ein Druckraum 2, z.B. ein Stahlbehälter, mit seinem Innenraum 5 über eine Gutleitung 11 mit einem Eintragsraum 1, z.B. einem Stahlbehälter, und über eine Gutleitung 31, mit einem Austragsraum 3, z.B. einem Stahlbehälter, verbunden. Sowohl im Eintragsraum 1 als auch im Austragsraum 3 sind verschiebbare Kolben 10 bzw. 30 angeordnet, die von Verstelleinrichtungen 7, z.B. hy draulischen Antrieben, betätigbar sind. In den Gutleitungen 11 bzw. 31 sind Ventile 12 bzw. 32 angeordnet. Zusätzlich ist der Druckraum 2 mit dem Eintragsraum 1 über eine Druckausgleichsleitung 13 mit einem regelbaren Ventil 14 und mit dem Austragsraum 3 über eine Druckausgleichsleitung 33 mit einem regelbaren Ventil 34 verbunden. Die Ventile 14 bzw. 34 sind mit Einstelleinrichtungen 8 zur Einregelung ihrer Öffnung versehen. Die Verstelleinrichtungen 7 für die Kolben 10 bzw. 30 sowie die Einstelleinrichtungen 8 können von einer zentralen Steuereinrichtung 6 betätigt werden. Diese zentrale Steuereinrichtung 6 kann auch die Ventile 12 bzw. 32 steuern.

In den Eintragsraum 1 mündet eine Beschickungsleitung 15, die mit einem Absperrventil 16 versehen ist. Vom Austragsraum 3 geht eine Austragsleitung 23 ab, die mit einem Ventil 22 absperrbar ist. In den Eintragsraum 1 mündet eine Leitung 18, die über ein Ventil 17 verschließbar ist und mit der Fluid zu- oder abführbar ist. In den Austragsraum 3 mündet eine Leitung 20, die über ein Ventil 19 verschließbar ist, mit welcher Fluid zu- oder abgeführt werden kann. Mit einer Leitung 25 kann über ein Ventil 24 Behandlungsfluid in den Druckraum 2 zur Behandlung des in diesem enthaltenen Gutes 4 zugeführt werden; mit einer Fluidleitung 27, in der sich ein Ventil 26 befindet, kann das mit zu extrahierenden Stoffen angereicherte Behandlungsfluid aus dem Druckraum 2 abgeführt werden.

Beim Betrieb der erfindungsgemäßen Anlage kann folgendermaßen vorgegangen werden:

Zu behandelndes Gut wird über die Beschickungsleitung 15 in den Eintragsraum 1 eingebracht. Im Eintragsraum 1 ist entweder Behandlungsfluid oder ein anderes mit dem Behandlungsfluid im Druckraum kompatibles Fluid vorhanden. Bei dem Fluid kommen Flüssigkeiten und/oder Gas in Frage, z.B. $CO_2$, $CO_2$-$H_2O$-Dampfgemische usw.

Nach Schließen des Ventils 16 wird der Kolben 10 abgesenkt, um überschüssiges Fluid aus dem Eintragsraum 1 über die Leitung 18 auszutragen, um des Behandlungsfluid im Druckraum 2 nicht mit unerwünschten oder zu großen Mengen von Fluiden aus dem Eintragsraum 1 zu belasten. Dabei kann der Kolben 10 bis zum Gut 4 oder bis zu einem gewissen Zusammenpressen des Gutes 4 abgesenkt werden, so daß auch zwischen dem Gut befindliches Fluid aus dem Eintragsraum 1 verdrängt wird. Dabei ist jedoch darauf zu achten, daß das Zusammenpressen des Gutes 4 diesem nicht abträglich ist. Dieses Fluid wird über die Leitung 18 in einen Speicher abgeführt und allenfalls dem Eintragsraum 1 im Zuge des Anhebens des Kolbens 10 wieder zugeführt.

Nachdem auf diese Weise das Volumen des Eintragsraumes 1 verringert worden ist, wird die Druckausgleichsleitung 13 mit dem Ventil 14 geöffnet und es erfolgt durch dosiertes Überströmen von Behandlungsfluid aus dem Druckraum 2 in den Eintragsraum 1 ein Druckausgleich. Diesem Druckausgleich könnte allenfalls noch eine Beschickung des Eintragsraumes 1 mit einem Druckfluid über die Leitung 18 vorangehen, wodurch weniger mit extrahierten Stoffen belastetes Behandlungsfluid in den Eintragsraum 1 übergeleitet werden muß.

Nach erfolgtem Druckausgleich wird gegebenenfalls bei noch offenem Ventil 14 das Ventil 12 in der Gutleitung 11 geöffnet und es erfolgt ein Überströmen des Gutes 4 in den Druckraum 2. Dabei kann der Kolben 10 die Überführung durch eine gewisse Druckausübung auf das Gut 4 unterstützen oder das Gut rieselt auf Grund seiner Konsistenz in den Druckraum 2. Wenn sämtliches Gut in den Druckraum 2 übergeführt ist, könnte noch mit Hilfe des Kolbens 10 das im Eintragsraum 1 befindliche Fluid in den Druckraum 2 übergeführt bzw. hineingepreßt werden. Nach Verschluß der Ventile 12 und 14 wird der Kolben 10 angehoben und das Restfluid im Eintragsraum 1 entspannt, vorzugsweise auf Atmosphärendruck eingeregelt, gegebenenfalls mit Einspeisung von Fluid über die Leitung 18, so daß das Ventil 16 in der Beschickungsleitung 15 ohne Fluidverlust geöffnet werden kann. Daraufhin kann eine neue Beschickung über die Zufuhrleitung 15 erfolgen. Wenn im Eintragsraum 1 nach Anheben des Kolbens 10 noch ein Überdruck des Fluides besteht, könnte dieses Fluid auch über die Leitung 18 in einen Druckfluidbehälter abgeleitet werden und dort allenfalls für eine weitere Verwendung komprimiert bzw. gespeichert werden.

Das im Druckraum 2 befindliche Gut 4 wird vorzugsweise im Gegenstrom mit dem Behandlungsfluid durchströmt, so daß im Gut enthaltene Bestandteile, z.B. ätherische Öle, Essenzen od. dgl. wirkungsvoll aufgeladen und abgeführt werden können.

Zum Austragen des Gutes aus dem Druckraum 2 wird der im Austragsraum 3 befindliche Kolben 30 derart verstellt, daß er das Volumen des Austragsraumes 3 minimiert. In das verbleibende Restvolumen 28 wird gegebenenfalls über die Druckfluidleitung 20 Druckfluid eingespeist, so daß sich ein Druck nahe dem Druck im Druckraum 2 einstellt. Nach oder anstelle dieser Maßnahme wird durch Öffnen des Ventiles 34 in der Druckausgleichsleitung 33 durch Überströmen von Behandlungfluid in dem vom Kolben 30 begrenzten Restvolumen ein Druckausgleich hergestellt. Dabei wird der Kolben 30 vorzugsweise kontinuierlich abwärts bewegt, um das Restvolumen 28 im Austragsraum 3 zu vergrößern, ohne allerdings einen allzugroßen Druckabfall im Restvolumen 28 zu verursachen, da ansonsten eine unerwünschte Abkühlung im Austragsraum 3 eintreten könnte. Nachdem der Kolben 30 seine Endstellung (z.B. die strichlierte Stellung) erreicht hat, und der Druckausgleich mit dem Druckraum 2 stattgefunden hat, kann das Ventil 34 geschlossen werden und es wird das Ventil 32 in dre Gutleitung 31 geöffnet und es folgt ein druckloses Überströmen behandelten Gutes aus dem Druckraum 2 in den Austragsraum 3. Vor Schließen des Ventiles 32 kann durch Verringerung des Volumens des Austragsraumes 3 noch eine gewisse Menge an Behandlungsfluid in den Druckraum 2 durch Anheben des Kolbens 30 rückgeführt werden. Nach Schließen des Ventils 32 kann Fluid über die Fluidleitung 20 in einen Rezipienten oder Sammelbehälter für Behandlungsfluid abgeleitet werden. Dabei kann immer auch ein gewisses Zusammenpressen des Gutes stattfinden, um zwischen dem Gut befindliches Behandlungsfluid austragen zu können. Daraufhin wird der Kolben 30 in eine Stellung überführt, in der das im Austragsraum befindliche Fluid maximal entspannt ist und es wird die Austragsleitung 23 mit dem Ventil 22 geöffnet und das behandelte Gut ausgetragen.

Als folgender Schritt könnte nach Schließen des Ventils 22 durch eine Aufwärtsbewegung des Kolbens 30 das im Austragsraum 3 verbliebene Behandlungsfluid z.B. über die Leitung 33 in den Druckraum 2 zurückgepreßt oder über die Leitung 20 ausgetragen und z.B. über die Leitung 25 in den Druckraum 2 eingeführt oder mit dem Kolben 30 komprimiert werden, um im Restvolumen 28 einen gewissen Druck aufzubauen.

Besonders vorteilhaft ist es, wenn die Kolben 10 und der weitere Kolben 30 in ihrer Bewegung aufeinander abgestimmt sind. Ein effizienter Betrieb der Anlage würde sich ergeben, wenn gleichzeitig mit dem Absenken des Kolbens 10 auch der Kolben 30 abgesenkt wird, nachdem das Ventil 24 zum Druckaufbau im Restvolumen 28 und die Ventile 12 und 32 geöffnet worden sind. In diesem Fall würden durch das Einbringen des zu behandelnden Gutes und das gleichzeitige Austragen des behandelten Gutes nahezu keine Druckschwankungen im Druckraum 2 auftreten.

Die Bewegung des Gutes 4 durch den Eintragsraum, den Druckraum und den Austragsraum kann durch Schwerkraft erfolgen. Dazu ist es vorteilhaft, wenn diese Bauelemente übereinander, vorzugsweise senkrecht, angeordnet sind. Es ist aber auch vorstellbar, daß die gesamte Anlage geneigt angeordnet ist.

Wenn nach dem Eintragen des Gutes 4 in den Druckraum der Kolben 10 in seine untere Endstellung geführt bzw. das Volumen des Eintragsraumes 3 völlig verringert wird, so wird das im Eintragsraum 3 enthaltene Fluid zur Gänze in den Druckraum 2 eingespeist, so daß kein Fluidverlust im Eintragsraum im Zuge der Wiederbeschickung eintritt. Zur Verstellung des Kolbens 10 im Eintragsraum 1 in seine obere Stellung könnte sodann das Ventil 17 geöffnet und über die Leitung 18 Fluid zugeführt werden.

Als Behandlungsfluid wird insbesondere ein Gas im überkritischen Zustand mit teilweise flüssigkeitsähnlichen Eigenschaften eingesetzt. Insbesondere im Hinblick auf derartige Gase bietet die erfindungsgemäße Vorgangsweise Vorteile, da derartige Gase auf Druck- und Temperaturschwankungen recht anfällig reagieren und ihre Eigenschaften bezüglich des Transportes von extrahierten Stoffen bzw. ihre Kondensationseigenschaften sehr rasch verändern.

Insbesondere wird bemerkt, daß die Kolben 10 bzw. 30 im vorliegenden Fall nicht den Sinn besitzen, Fluide, insbesondere Gase, zu komprimieren, sondern lediglich als Verdränger für eingebrachtes Gut bzw. für die im wesentlichen drucklose Verschiebung von Gasmengen dienen. Damit wird eine in Chargen erfolgende quasikontinuierliche Beschickung bzw. Austragung von Gut erreicht und der im Druckraum 2 stattfindende Prozeß wird durch das Beschicken und Austragen nicht unterbrochen.

Bei entsprechender Öffnung des Ventiles 32 in der Gutleitung 31 und Steuerung des Kolbens 30 in pulsierenden Auf- und Abbewegungen könnte durch das Verschieben der Gasmengen aus dem Restvolumen 28 in den Druckraum 2 bzw. Überströmen vom Druckraum 2 in das Restvolumen 28 eine Pulsierung bzw. Vermengung des im Druckraum 2 befindlichen Gutes 4 erfolgen.

Das Verhältnis der Volumina von Eintragsraum 1 zu Druckraum 2 bzw. von Austragsraum 3 zu Druckraum 2 liegt bei einem Verhältnis von > 1 : 10, somit sind diese Volumina wesentlich kleiner als die des Druckraumes 2.

Die Bewegungsabläufe der Kolben 10 bzw. 30 und die Öffnungszeiten der Ventile 14 und 34 werden für die jeweiligen verwendeten Fluide und für das Gut in der Praxis ermittelt und der zentralen Steuereinrichtung 6 eingegeben, welche die entsprechenden Steuervorgänge sodann bestimmt und vornimmt.

## Patentansprüche

1. Verfahren zum Behandeln von fließfähigem, insbesondere rieselfähigem Gut in einem Druckraum, z.B. Extraktor, wobei das Gut in einen Eintragsraum mit im Vergleich zum Druckraum niedrigerem Druck, vorzugsweise Atmosphärendruck, eingebracht und nach Vornahme einer Druckanpassung des im Eintragsraum bestehenden Druckes an den Druck des Behandlungsfluids im Druckraum aus dem Eintragsraum in den Druckraum übergeführt wird, aus dem das behandelte Gut in einen Austragsraum ausgetragen wird, dadurch gekennzeichnet, daß zum Erreichen eines Druckausgleiches zwischen dem Eintragsraum und dem Druckraum der Eintragsraum mit dem Druckraum leitungsmäßig verbunden und Fluid aus dem Druckraum in den Eintragsraum übergeleitet wird.

2. Verfahren nach Anspruch 1, dadurch gekennzeichnet, daß vor dem Druckausgleich das Volumen des Eintragsraumes bis auf den vom zu behandelnden Gut eingenommenen Raum, gegebenenfalls unter Vornahme eines Zusammenpressens des Gutes, verringert wird, wobei im Eintragsraum befindliches Fluid, insbesondere Behandlungsfluid, aus diesem verdrängt wird.

3. Verfahren nach Anspruch 2, dadurch gekennzeichnet, daß nach dem Überleiten des zu behandelnden Gutes vom Eintragsraum in den Druckraum und Trennung der Verbindung zwischen Eintragsraum und Druckraum das im verringerten Volumen befindliche Fluid entspannt, insbesondere auf das gesamte Volumen des Eintragsraumes und vorzugsweise auf Atmosphärendruck entspannt wird.

4. Verfahren nach einem der Ansprüche 1 bis 3, dadurch gekennzeichnet, daß vor dem Druckausgleich der Druck im Eintragsraum durch Fluideinspeisung, insbesondere von Behandlungsfluid, aus einer Druckfluidquelle erhöht wird.

5. Verfahren nach einem der Ansprüche 1 bis 4, dadurch gekennzeichnet, daß zum Erreichen eines Druckausgleiches zwischen dem Druckraum und dem Austragsraum der Austragsraum mit dem Druckraum leitungsmäßig verbunden wird und Fluid aus dem Druckraum in den Austragsraum übergeleitet wird.

6. Verfahren nach Anspruch 5, dadurch gekennzeichnet, daß vor Herstellung einer leitungsmäßigen Verbindung zwischen dem Druckraum und dem Austragsraum das Volumen des Austragsraumes auf ein Restvolumen, insbesondere nahe dem Wert Null, reduziert wird und eine Vergrößerung des Volumens des Austragsraumes vorzugsweise nur auf einen Teil des Volumens des Austragsraumes konform mit dem Überströmen von Behandlungsfluid in den Austragsraum vorgenommen wird.

7. Verfahren nach Anspruch 5 oder 6, dadurch gekennzeichnet, daß nach und/oder während dem Druckausgleich zwischen dem Druckraum und dem Austragsraum behandeltes Gut aus dem Druckraum in den Austragsraum übergeführt wird.

8. Verfahren nach einem der Ansprüche 1 bis 7, dadurch gekennzeichnet, daß nach dem Überführen des behandelten Gutes in den Austragsraum durch Volumenverkleinerung des Austragsraumes, gegebenenfalls unter Vornahme eines gleichzeitigen Pressens des Gutes, eine Rückführung von Behandlungsfluid in den Druckraum erfolgt.

9. Verfahren nach einem der Ansprüche 5 bis 8, dadurch gekennzeichnet, daß nach dem Überleiten des behandelten Gutes in den Austragsraum und Unterbrechung der Verbindung zwischen dem Druckraum und dem Austragsraum ein Druckabbau im Austragsraum, insbesondere auf Atmosphärendruck, durch Vergrößerung seines Volumens erfolgt und das behandelte Gut entnommen wird.

10. Verfahren nach einem der Ansprüche 1 bis 9, dadurch gekennzeichnet, daß das Einspeisen des zu behandelnden Gutes in den Druckraum gleichzeitig mit dem Austragen des behandelten Gutes aus dem Druckraum erfolgt.

11. Verfahren nach einem der Ansprüche 1 bis 10, dadurch gekennzeichnet, daß das Überleiten des Gutes vom Eintragsraum in den Druckraum bzw. vom Druckraum in den Austragsraum durch Schwerkraftförderung erfolgt.

12. Verfahren nach einem der Ansprüche 1 bis 11, dadurch gekennzeichnet, daß als zu behandelndes Gut ein extrahierbares Gut, z.B. Tee, Kaffee od. dgl., eingesetzt wird und das Gut im Druckraum mit überkritischem $CO_2$-$H_2O$-Dampf als Behandlungsfluid bei einer Temperatur von 40 bis 150° C und Drücken von 100 bis 400 bar, vorzugsweise 200 bis 300 bar, in Kontakt gebracht wird.

13. Anordnung zum Behandeln von fließfähigem, insbesondere rieselfähigem Gut, in einem Druckraum, z.B. Extraktor, der über Gutleitungen mit einem vorgeordneten Eintragsraum und einem nachgeordneten Austragsraum verbunden ist, wobei dem Eintragsraum Beschik-

kungseinrichtungen für das zu behandelnde Gut und dem Druckraum Zufuhreinrichtungen für ein Behandlungsfluid zugeordnet sind, insbesondere zur Durchführung des Verfahrens nach einem der Ansprüche 1 bis 12, dadurch gekennzeichnet, daß im Eintragsraum (1) ein Verdränger bzw. Kolben (10) angeordnet ist, mit dem das Volumen des Eintragsraumes (1) insbesondere vor und nach der Beschickungsphase des Druckraumes (2) veränderbar ist.

14. Anordnung nach Anspruch 13, dadurch gekennzeichnet, daß zusätzlich zur absperrbaren Gutleitung (11) zwischen dem Eintragsraum (1) und dem Druckraum (2) eine mit einem inbesondere feinregulierbaren Ventil (14) absperrbare Druckausgleichsleitung (13) vorgesehen ist.

15. Anordnung zum Behandeln von fließfähigem, insbesondere rieselfähigem Gut, in einem Druckraum, z.B. Extraktor, der über Gutleitungen mit einem vorgeordneten Eintragsraum und einem nachgeordneten Austragsraum verbunden ist, wobei dem Eintragsraum Beschickungseinrichtungen für das zu behandelnde Gut und dem Druckraum Zufuhreinrichtungen für ein Behandlungsfluid zugeordnet sind, insbesondere nach Anspruch 13 oder 14, dadurch gekennzeichnet, daß im Austragsraum (3) ein weiterer Verdränger bzw. Kolben (30) angeordnet ist, mit dem das Volumen des Austragsraumes (3) insbesondere vor und nach der Austragsphase aus dem Druckraum (2) veränderbar ist.

16. Anordung nach einem der Ansprüche 13 bis 15, dadurch gekennzeichnet, daß zusätzlich zu absperrbaren Gutleitung (31) zwischen dem Druckraum (2) und dem Austragsraum (3) eine mit einem weiteren, insbesondere feinregulierbaren Ventil (34) absperrbare weitere Druckausgleichsleitung (33) vorgesehen ist.

17. Anordnung nach einem der Ansprüche 13 bis 16, dadurch gekennzeichnet, daß der Querschnitt der Gutleitungen (11, 31) größer, insbesondere beträchtlich größer ist als der Querschnitt der Druckausgleichsleitungen (13, 33).

18. Anordnung nach einem der Ansprüche 13 bis 17, dadurch gekennzeichnet, daß der Verdränger bzw. Kolben (10) und der weitere Verdränger bzw. Kolben (30) zur Durchführung synchroner Kolbenbewegungen während der Beschickungs- und Austragsphase gegebenenfalls mittels einer hydraulischen Antriebseinrichtung gekoppelt sind.

19. Anordnung nach einem der Ansprüche 13 bis 18, dadurch gekennzeichnet, daß zur Steuerung der Verdränger bzw. Kolben (10, 30) und der Ventile (14, 34) in den Druckausgleichsleitungen (13, 33) eine Steuereinrichtung (6) für entsprechende Kolbenantriebe (7) und Ventilantriebe (8) vorgesehen ist.